# EUROPÄISCHE PATENTSCHRIFT

(11) **EP 0 881 730 B1**
(45) Veröffentlichungstag und Bekanntmachung des Hinweises auf die Patenterteilung: **15.03.2000**
(21) Anmeldenummer: 98108412.2
(22) Anmeldetag: 08.05.1998
(51) Int. Cl.: H02G 9/06, F16L 9/18, F16L 11/22, F16L 1/11

(54) **Flexibler Rohrverbund**
Flexible bundle of tubes
Faisceau flexible de tubes

(30) Priorität: 30.05.1997 DE 19722746
(43) Veröffentlichungstag der Anmeldung: 02.12.1998
(73) Patentinhaber: REHAU AG + Co, 95111 Rehau (DE)
(72) Erfinder: Tscharnke, Roland, 95111 Rehau (DE); Döll, Achim, 95111 Rehau (DE)

(56) Entgegenhaltungen:
- FR-A- 1 520 702
- FR-A- 1 552 682
- FR-A- 2 225 680
- GB-A- 2 217 425

## Beschreibung

Die Erfindung betrifft einen flexiblen Rohrverbund aus einzelnen Kunststoffrohren, wobei die untereinander benachbarten Rohre längsverlaufend linienförmig aneinanderliegen und von einer Deckschicht aus Kunststoff umgeben sind, wobei die Deckschicht mit dem zugeordneten Wandbereich der Einzelrohre durchgehend längsverlaufend fest verbunden ist und wobei die Deckschicht außerhalb der Berührungslinien der Einzelrohre endet.

Eine gattungsgemäße Vorveröffentlichung ist die DE 33 08 482 C2. Der dort beschriebene flexible Rohrverbund löst die Aufgabe, die Einzelrohre des Verbundes fest miteinander zu verhaften und die Einzelrohre trotz dieser Haftung so flexibel aneinander zu halten, daß ein Aufwickeln des Rohrverbundes auf Wickeltrommeln genauso möglich ist, wie das ungehinderte Einziehen des Rohrverbundes in Schutzrohre, z .B. in Kabelkanäle.

Wesentliches Merkmal dieses Rohrverbundes des Standes der Technik sind die durch die Deckschicht miteinander verbundenen Einzelrohre. Dadurch wird der Rohrverbund zusätzlich gefestigt, ohne ihm die durch die zueinander frei beweglichen Einzelrohre des Rohrbündels vorhandene Flexibilität zu nehmen.

Aus der DE 39 04 199 C2 ergibt sich ein weiterer Rohrverbund, der zur Aufnahme von Kabeln dient. Die Einzelrohre dieses Rohrverbundes sind durch angeformte, flexible Abstandstege miteinander verbunden und können zu einem in bezug auf zwei Achsen symmetrischen Rohrbündel zusammengelegt werden. Die Einzelrohre haben dabei einen achteckigen Außenquerschnitt und liegen im Rohrbündel so zusammen, daß jeweils zwei gegenüberliegende Flächen des achteckigen Querschnitts der einzelnen Kunststoffrohre als Kontaktflächen dienen. Dabei wird ein Kemhohlraum im zusammengelegten Rohrbündel freigelassen. In diesen Kernhohlraum können neben den in die Einzelrohre eingezogenen Kabelsträngen weitere Kabel verlegt werden. Ein ähnlicher Aufbau ergibt sich aus der EU 02 31 504 B1. Diese Kernhohlräume dienen beispielsweise zur Aufnahme von Telefonkabeln oder anderen Kabeln geringen Durchmessers.

Aus der EU 0 159 307 B1 ist ein Verfahren zum Aufbringen eines elektrisch leitfähigen Drahtes auf ein Schutzrohr bekannt. Dieser Draht wird bei der Schutzrohr-Herstellung fortlaufend entlang einer zur Schutzrohrachse parallelen Mantellinie verlaufend an den Außenumfang des Schutzrohres aufgeklebt oder in den Schutzrohrmantel so eingeschmolzen, daß er im Querschnitt der Schutzrohrwand liegt und von dem Kunststoffmaterial der Schutzrohrwand allseitig umgeben ist. Wegen der erheblichen Länge der Kabelschutzrohre, die im Bereich von Lichtwellenleiterkabeln mehrere Kilometer betragen kann, besteht die Notwendigkeit, das Kabelschutzrohr aufzurollen, wobei es zu Spannungsproblemen im Kabelschutzrohr aufgrund des unterschiedlichen Zug- und Druckverhaltens von Kabelschutzrohr und in die Wand eingebrachten Draht kommt. Dieses Problem wird nach dem Stand der Technik dadurch gelöst, daß bei der Kabelschutzrohr-Herstellung der Draht längs einer Kabelschutzrohr-Mantellinie in die Wandung des Kabelschutzrohre eingelegt wird, die in einer in bezug auf die Biegung des Kabelschutzrohres beim anschließenden Aufwickeln des fertiggestellten Rohres biegeneutralen Rohrumfangszone liegt.

Diese Maßnahme führt zwar dazu, daß beim Aufwickeln des Kabelschutzrohres keine unterschiedlichen Spannungen zwischen Draht und Schutzrohr bestehen. Durch das Einlegen des Drahtes in die Kabelschutzrohrwand wird aber die Wanddicke des Kabelschutzrohres in diesem Bereich um die Dicke des eingelegten Drahtes verschwächt. Da Kabelschutzrohre bei der Belegung mit Kabeln in der Regel mit Druck beaufschlagt werden, kann diese Verschwächung - insbesondere im Verbindungsbereich aufeinanderfolgender Kabelschutzrohre - zu Brüchen und damit zu Undichtigkeiten der Kabelschutzrohre führen.

Hier setzt die Erfindung ein, die es sich zur Aufgabe gestellt hat, die Nachteile des Standes der Technik zu vermeiden und ein Kabelschutzrohr anzugeben, das ohne zusätzliche Maßnahmen im Verbund zwischen Kabelschutzrohr und Draht aufgewickelt werden kann und das aufgrund der Lage des Drahtes am Kabelschutzrohr einer Detektion von außen ohne Einschränkungen zugänglich ist. Erfindungsgemäß wird dazu vorgeschlagen, daß in den Hohlraum zwischen der Berührungslinie zweier im Verbund liegender Einzelrohre und dem zugeordneten Deckschichtbereich wenigstens ein elektrischer Leiter eingebracht ist.

Der elektrische Leiter der Erfindung kann ein Metalldraht, z.B. ein Kupferdraht sein. Da dieser Draht einerseits durch die betroffenen Oberflächen der aneinanderliegenden Rohre des Rohrverbundes und andererseits durch den zugeordneten Deckschichtbereich in der dadurch gebildeten Hohlkammer völlig von isolierenden Oberflächen aus Kunststoff umgeben ist, ist eine gesonderte Isolation des Drahtes nicht erforderlich.

Werden allerdings zwei Drähte in die beschriebene Hohlkammer eingebracht, wobei der eine Draht beispielsweise bei einer Signalübertragung als Zuleitung und der andere Draht als Ableitung dient, empfiehlt es sich, die Drähte auch untereinander mit einem isolierenden Kunststoffmantel zu umgeben.

Dieser isolierende Kunststoffmantel hat den zusätzlichen Vorteil, daß der Draht über diesen Kunststoffmantel wenigstens partiell mit der Deckschicht oder der Oberfläche der zugeordneten Kunststoffrohre fest verbindbar ist. Diese Verbindung kann beispielsweise eine Schweißverbindung sein, die bei der Ummantelung der Einzelrohre mit der Deckschicht erfolgt. Bei diesem Vorgang wird die Deckschicht um die Einzelrohre extrudiert, wobei das Kunststoffmaterial der Deckschicht während des Aufextrudierens auf den Außenumfang der Einzelrohre oberhalb der Kristallisationstemperatur des Kunststoffes liegt und damit schweißfähig ist. Wenn dieses schweißfähige Material im Augenblick des Aufbringens auf den Außenumfang der zugeordneten Einzelrohre mit der Isolation des gleichzeitig in die Hohlkammer eingeführten Metalldrahtes partiell oder fortlaufend in Berührung gebracht wird, wird der Draht an der inneren Oberfläche der Deckschicht partiell oder fortlaufend über seine Isolierung mit dieser verschweißt. Dieser Schweißvorgang kann auch partiell oder fortlaufend an den den Hohlraum begrenzenden äußeren Umfangbereichen der einzelnen Rohre erfolgen, sobald diese beim Vorgang des Aufextrudierens der Deckschicht an ihrer äußeren Umfangsfläche soweit erhitzt werden, daß auch dort der Schweißvorgang zur Isolierung des Metalldrahtes möglich ist.

Selbstverständlich können auch der oder die Metalldrähte lose in den Hohlraum zwischen der Berührungslinie zweier im Verbund liegender Einzelrohre und dem zugeordneten Deckschichtbereich des Rohrverbundes eingebracht sein.

In diesen Hohlraum können auch ein oder mehrere Röhrchen zur Aufnahme von Lichtwellenleitern, Glasfaserbündeln oder ähnlichen Leitern eingebracht sein.

Der erfindungsgemäße Rohrverbund hat den Vorteil, daß die Innendruckfestigkeit der über die Deckschicht verbundenen Einzelrohre ohne Wandstärkenverschwächung der Rohrwand durch den in den Wandquerschnitt eingebrachten Draht vollständig erhalten bleibt. Darüber hinaus ist ein wesentlicher Vorteil, daß bei einer Verbindung zweier Rohrstränge, die in der Hohlkammer liegenden Drähte nicht in mühsamer Montagearbeit aus dem Wandquerschnitt der Einzelrohre herausgelöst werden muß. Die leitende Verbindung des oder der Drähte zum folgenden Rohrschuß erfolgt vielmehr nach der Erfindung durch das Anlegen eines einfachen elektrischen Verbindungselementes.

Da der oder die Metalldrähte in außenliegenden Hohlkammern am Rohrverbund eingelegt sind, ist auch ein einwandfreies und ungestörtes Detektieren von im Erdreich verlegten Rohrleitungen durch von der Erdoberfläche angreifende Detektierapparate möglich. Auf diese Weise kann die im Erdboden verlegte Trasse unschwer verfolgt werden, ohne daß das darüberliegende Erdreich bewegt werden müßte, oder daß die Detektion störende Faktoren aus den in den Kabelschutzrohre verlegten Leitern in Kauf genommen werden müßten.

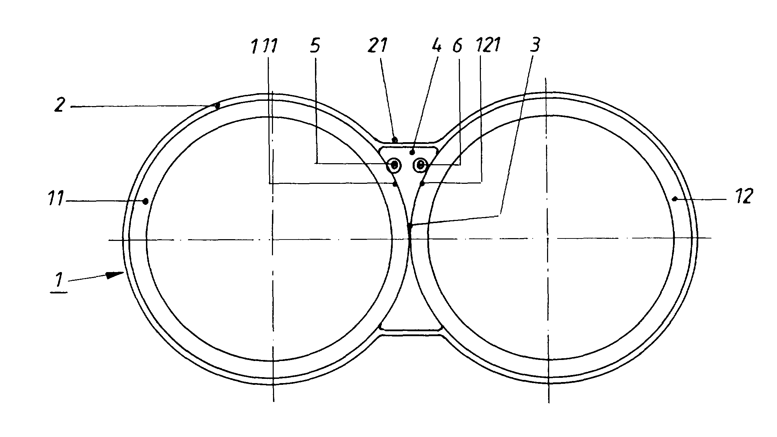

In der Zeichnung ist ein Ausführungsbeispiel des erfindungsgemäßen Rohrverbundes 1 im Querschnitt dargestellt. Der Rohrverbund 1 besteht aus zwei Kabelschutzrohren 11, 12, welche über die Deckschicht 2 so fest miteinander verbunden sind, daß die Einzelrohre an ihrer Berührungslinie 3 fest aneinanderliegen. Von der Berührungslinie 3 beginnend bilden die zugeordneten Oberflächen 111, 121 die Einzelrohre 11, 12 zusammen mit den zugeordneten Bereich 21 der Deckschicht 2 den Hohlraum 4. In den Hohlraum 4 sind in der gezeigten Darstellung zwei Metalldrähte 5, 6 eingebracht, die mit oder ohne Isolierung versehen sein können. Die Metalldrähte 5, 6 liegen in der gezeigten Darstellung einerseits an den zugeordneten Mantelflächen 111, 121 der Einzelrohre 11, 12 und andererseits an der Berührungslinie untereinander an. Die Metalldrähte können jedoch in beliebiger anderer Anordnung im Hohlraum 4 verlegt sein.

Der im Bild gezeigte Rohrverbund aus zwei Einzelrohren 11, 12 kann in beliebiger Form um weitere Einzelrohre erweitert sein. Es spielt also für die Erfindung keine Rolle, wie viele Einzelrohre von der Deckschicht 2 zusammengehalten sind und wie viele Hohlräume 4 auf diese Weise zwischen den mehreren Einzelrohren gebildet werden.

Im Bedarfsfall kann in jeden der Hohlräume 4 wenigstens ein Draht und/oder Röhrchen eingelegt sein, der einerseits zur Detektion der verlegten Rohrleitungen von außen und andererseits zur Signalübermittlung innerhalb des Rohrverbundes herangezogen werden kann.

## Patentansprüche

1. Flexibler Rohrverbund aus einzelnen Kunststoffrohren, wobei die untereinander benachbarten Rohre längsverlaufend linienförmig aneinanderliegen und von einer Deckschicht aus Kunststoff umgeben sind, wobei die Deckschicht mit dem zugeordneten Wandbereich der Einzelrohre durchgehend längsverlaufend fest verbunden ist, und wobei die Deckschicht außerhalb der Berührungslinien (3) der Einzelrohre endet, dadurch gekennzeichnet, daß in den Hohlraum (4) zwischen der Berührungslinie (3) der im Verbund liegenden Einzelrohre (11, 12) und dem zugeordneten Deckschichtbereich (21) wenigstens ein elektrischer Leiter (5, 6) eingebracht ist.

2. Flexibler Rohrverbund nach Anspruch 1, dadurch gekennzeichnet, daß der elektrische Leiter (5, 6) mit einer Kunststoffisolierung umgeben ist.

3. Rohrverbund nach Anspruch 1, dadurch gekennzeichnet, daß die Deckschicht (2) mit der Kunststoffisolierung der elektrischen Leiter (5, 6) wenigstens abschnittsweise fest verbunden ist.

4. Rohrverbund nach Anspruch 3, dadurch gekennzeichnet, daß die Verbindung von Deckschicht (2) und Kunststoffisolierung eine Schweißverbindung ist.

5. Rohrverbund nach Anspruch 1, dadurch gekennzeichnet, daß die Kunststoffisolierung der elektrischen Leiter (5, 6) wenigstens abschnittsweise mit den den Hohlraum (4) begrenzenden äußeren Umfangsbereichen (111, 121) der Einzelrohre (11, 12) fest verbunden ist.

6. Rohrverbund nach Anspruch 1, dadurch gekennzeichnet, daß zusätzliche Leiter wie Lichtwellenleiter, Glasfaserbündel etc. in den Hohlraum (4) eingebracht sind.

## Claims

1. A flexible compound tube composed of individual plastic tubes, wherein: the adjacent tubes abut linearly in a longitudinal direction and are sheathed in a plastic covering layer; the covering layer is continuously securely connected to the associated wall area of the individual tubes; and the covering layer terminates beyond the line of contact (3) of said individual tubes; and said flexible compound tube is characterized in that at least one electrical conductor (5,6) is placed in the cavity (4) between the line of contact (3) of said individual tubes (11, 12) in the composite and the associated area of the covering layer (21).

2. A flexible compound tube according to Claim 1, characterized in that the electrical conductor (5,6) is sheathed in plastic insulation.

3. A compound tube according to Claim 1, characterized in that the covering layer (2) is securely connected to the plastic insulation of the electrical conductors (5,6) in at least some segments.

4. A compound tube according to Claim 3, characterized in that the connection between the covering layer (2) and the plastic insulation is a welded joint.

5. A compound tube according to Claim 1, characterized in that the plastic insulation of the electrical conductors (5,6) is attached to the external circumferential boundary regions (111,112) of the individual tubes (11, 12), at least in some segments.

6. A compound tube according to Claim 1, characterized in that additional conductors, such as optical fibers, glass fiber bundles, etc., are placed in the cavity (4).

## Revendications

1. Gaine flexible constituée de tubes plastiques individuels, les tubes contigus cote à cote formant une ligne dans le sens longitudinal et étant recouverts d'une couche protectrice en plastique, la couche protectrice étant solidement fixée de façon continue, dans le sens longitudinal, à la paroi des tubes individuels, la couche protectrice s'arrêtant en dehors de la ligne de contact des tubes individuels, caractérisée en ce qu'il y a au moins un conducteur électrique (5, 6) dans la chambre creuse (4) entre la ligne de contact (3) des tubes (11, 12) et la zone correspondante (21) de la couche protectrice.

2. Gaine flexible selon la revendication 1, caractérisée en ce que le conducteur électrique (5, 6) est entouré d'une isolation en plastique.

3. Gaine selon la revendication 1, caractérisée en ce que la couche protectrice (2) est solidement fixée, du moins par segments, à l'isolation en plastique du conducteur électrique (5, 6).

4. Gaine selon la revendication 3, caractérisée en ce que la liaison de la couche protectrice (2) et de l'isolation plastique est une soudure.

5. Gaine selon la revendication 1, caractérisée en ce que l'isolation plastique du conducteur électrique (5, 6) est solidement fixée, du moins par segments, aux zones périphériques extérieures des tubes (11, 12) délimitant la chambre creuse (4).

6. Gaine selon la revendication 1, caractérisée en ce que des conducteurs supplémentaires comme des guides d'onde optique, des faisceaux de fibre de verre etc. sont montés dans la chambre creuse (4).
